Europäisches Patentamt

European Patent Office

Office européen des brevets

(11) Veröffentlichungsnummer: **0 264 791**
**A2**

(12) **EUROPÄISCHE PATENTANMELDUNG**

(21) Anmeldenummer: 87114969.6

(51) Int. Cl.⁴ **C08L 25/16** , C08L 35/06

(22) Anmeldetag: 13.10.87

(30) Priorität: 24.10.86 DE 3636191

(43) Veröffentlichungstag der Anmeldung:
27.04.88 Patentblatt 88/17

(84) Benannte Vertragsstaaten:
DE FR GB IT

(71) Anmelder: BAYER AG
Konzernverwaltung RP Patentabteilung
D-5090 Leverkusen 1 Bayerwerk(DE)

(72) Erfinder: Wingler, Frank, Dr.
Walter-Flex-Strasse 17
D-5090 Leverkusen(DE)
Erfinder: Sümmermann, Klaus, Dr.
Wolfskaul 12
D-5000 Köln 80(DE)
Erfinder: Jansen, Ulrich, Dr.
Stürzelberger Strasse 50
D-4047 Dormagen 5(DE)
Erfinder: Döring, Joachim, Dr.
Am Alten Broich 22
D-4018 Langenfeld(DE)
Erfinder: Pischtschan, Alfred,Dr.
Zur Eiche 33
D-5067 Kürten(DE)

(54) **Thermoplastische Formmassen.**

(57) Thermoplastische Formmassen aus

A. 90 bis 30 Gew.-Teilen eines durch Lösungs-oder Massepolymerisation von

$a_1$ 30 bis 45 Gew.-% $\alpha$-Methylstyrol,

$a_2$ 26 bis 35 Gew.-% Acrylnitril und

$a_3$ 44 bis 20 Gew.-% Styrol und/oder p-Methylstyrol

hergestellten Copolymerisates mit einem Gehalt an eingebautem Acrylnitril von 27-30 Gew.-%,

B. 5 bis 60 Gew.-Teilen eines statistischen Copolymerisates aus

$b_1$ 18 bis 24 Gew.-% Maleinsäureanhydrid und

$b_2$ 82 bis 76 Gew.-% Styrol und/oder p-Methylstyrol und

C. 5 bis 40 Gew.-Teilen eines Pfropfpolymerisates von 70 bis 30 Gew.-% eines Gemisches aus

$c_1$ einem Vinylaromat und/oder $C_1$-$C_4$-Methylacrylsäurealkylester und

$c_2$ Acrylnitril auf 30 bis 70 Gew.-% eines Kautschuks mit einer Glasübergangstemperatur von unter -10°C.

EP 0 264 791 A2

## Thermoplastische Formmassen

Die Erfindung betrifft als schlagzähe und wärmeformbeständige thermoplastische Formmassen geeignete Polymermischungen aus

A. einem in Masse oder in Lösung hergestellten α-Methylstyrol/Styrol/Acrylnitril-Terpolymerisat,

B. einem statistisch aufgebauten Maleinsäureanhydrid/Styrol-Polymerisat und

C. einem Pfropfmischpolymerisat, das einen Vinylaromat und Acrylnitril auf einer Kautschukgrundlage mit einer Glasübergangstemperatur von unterhalb -10°C pfropfpolymerisiert enthält.

Styrol kann in den Komponenten durch p-Methylstyrol ersetzt sein, es kann auch anteilmäßig anstelle Styrol oder p-Methylstyrol Methylmethacrylat in den Komponenten enthalten sein.

Schlagzähe thermoplastische Formmassen aus thermoplastischen Acrylnitrilcopolymerisaten und Pfropfmischpolymerisaten von Vinylaromaten, Methylmethacrylat und/oder Acrylnitril auf Kautschuke mit einer Glasübergangstemperatur unterhalb von -10°C der Pfropfgrundlagen sind bekannt.

Diese Massen fallen unter die Sammelbegriffe ABS (auf Polydienbasis), ASA (auf Acrylatkautschukbasis) und EPAS (auf Ethylen-Propylen-Copolymerisatkautschuke). Sie zeichnen sich durch gute Chemikalienfestigkeit und hohe Schlagzähigkeit aus, werden daher verwendet für Haushaltsgeräte, Gehäuse für elektronische Geräte sowie im Automobilbau. In den letzten Jahren sind die Anforderungen an die Wärmeformbeständigkeit gestiegen. Für viele Anwendungen reicht die Wärmeformbeständigkeit der ABS, ASA und EPAS-Formmassen, die in der Größenordnung von etwa 100°C liegen, nicht mehr aus. Insbesondere im Automobilbau wird Wärmeformbeständigkeit von über 108°C benötigt. In den letzten Jahren wurden daher eine Reihe wärmeformbeständigerer ABS, ASA und EPAS-Formmassen auf Basis von α-Methylstyrol, p-Methylstyrol, Maleinsäureanhydrid und N-substituierten Maleinimiden entwickelt (vgl. DE-OS 3 332 327, DE-OS 3 332 326, DE-OS 1 950 599, DE-OS 3 130 773; EP 0 002 961, DE-OS 3 406 417, US-PS 4 221 880, US-PS 4.129 615, DBP 2 343 408, DE-OS 330 161 und DE-OS 3 303 864).

Meist bedingt hier höhere Wärmeformbeständigkeit aber andere Nachteile, wie aufwendigere Herstellverfahren (z.B. bei Verwendung von N-substituierten Maleinimid-Derivaten) oder Verschlechterung der mechanischen Eigenschaften, (z. B. bei Mischungen, die statistische Maleinsäureanhydrid-Copolymerisate enthalten). Infolge ungenügender Verträglichkeit kommt es häufig bei mechanischer Beanspruchung zu Laminationserscheinungen oder Schieferbrüchen oder zum Abreißen an der Grenzfläche zwischen dem thermoplastischen Copolymerisat ("Matrixharz") und dem Propfcopolymerisat ("Schlagzäh-Propfkomponente"). Ein häufiges Erscheinungsbild bei Maleinsäureanhydrid/Acrylnitril-Harzen ist eine Vernetzung während der Verarbeitung bzw. eine Zunahme der Schmelzviskosität.

In der DE-OS 33 32 326 wird eine thermoplastische Formmasse aus einem Styrol/Acrylnitril-Copolymeren, aufgebaut aus Styrol und/oder einem kernalkylierten Styrolderivat und Acrylnitril, einem Styrol-Maleinsäureanhydrid-Copolymeren und einem Pfropfmischpolymerisat beschrieben. In dieser Formmasse muß das Verhältnis von Acrylnitril-zu Maleinsäureanhydrid-Anteilen eine Rechenformel erfüllen. die mechanischen Eigenschaften wie Zähigkeit und Steifigkeit von Komponenten auf Basis von statistischen Maleinsäureanhydrid-Harzen sind im allgemeinen denen von Styrol/Acrylnitril-Harzen unterlegen. Bei verträglichen Polymersystemen liegen meist die Eigenschaftswerte zwischen den Grenzwerten der Einzelkomponenten.

Es wurde gefunden, daß die erfindungsgemäßen Polymerblends auf Basis von α-Methylstyrol/Styrol/Acrylnitril-Copolymerisaten und statistischen Maleinsäureanhydrid/Styrol-Copolymerisaten besonders ausgewogene Gebrauchs-Eigenschaften besitzen. Die hervorragende Eigenschaftskombination wird nur mit den ausgewählten α-Methylstyrol/Styrol/Acrylnitril-Copolymerisaten erzielt.

Gegenstand der Erfindung sind thermoplastische Formmassen aus:

A. 90 bis 30 Gew.-Teilen eines durch Lösungs-oder Massepolymerisation von

$a_1$ 30 bis 45 Gew.-% α-Methylstyrol

$a_2$ 26 bis 35 Gew.-% Acrylnitril und

$a_3$ 44 bis 20 Gew.-% Styrol und/oder p-Methylstyrol

hergestellten Copolymerisates mit einem Gehalt an eingebautem Acrylnitril von 27-30 Gew.-%,

B. 5 bis 60 Gew.-Teilen eines statistischen Copolymerisates aus

$b_1$ 18 bis 24 Gew.-% Maleinsäureanhydrid und

$b_2$ 82 bis 76 Gew.-% Styrol und/oder p-Methylstyrol und

C. 5 bis 40 Gew.-Teilen eines Pfropfpolymerisates von 70 bis 30 Gew.-% eines Gemisches aus

$c_1$ einem Vinylaromat und/oder $C_1$-$C_4$-Methylacrylsäurealkylester und

$c_2$ Acrylnitril auf 30 bis 70 Gew.-% eines Kautschuks mit einer Glasübergangstemperatur von unter -10°C.

2

Besonders bevorzugte Copolymerisate A werden erhalten durch kontinuierliche homogene Polymerisation in einem kontinuierlich beschickten Tankreaktor unter stationären und ideal durchmischten Bedingungen, bei 100 bis 140°C, mittleren Verweilzeiten von mehr als 60 Minuten, Mono-merumsätzen von 40 bis 55 Gew.-%, in Gegenwart von 0,5 bis 0,005 Mol pro Mol Gesamtmonomer, eines oder mehrerer, in Radikale zerfallender Polymerisationsinitiatoren mit einer Halbwertszeit von 5 sec. bis 9 min bei 130°C.

Um zu vollständig befriedigenden Ergebnissen zu gelangen, ist es erforderlich, bei der Herstellung des Copolymerisatharzes A die Kombination der oben angegebenen Bedingungen einzuhalten. Insbesondere werden geeignete Terpolymerisate erhalten, wenn die folgenden Herstellungsbedingungen gleichzeitig erfüllt sind:

1) Kontinuierliche homogene Polymerisation in einem kontinuierlich beschickten Tankreaktor unter stationären und ideal durchmischten Bedingungen,

2) ein Monomereinsatz von

$a_1$ 30 bis 45 Gew.-% $\alpha$-Methylstyrol,

$a_2$ 26 bis 35 Gew.-% Acylnitril,

$a_3$ 44 bis 20 Gew.-% Styrol und/oder p-Methylstyrol,

3) Polymerisation bei 100-140°C,

4) mittlere Verweilzeiten von länger als 60 Min., vorzugsweise 90 bis 300 Min.,

5) Monomerumsätze von 35 bis 55 Gew.-%,

6) unter Mitverwendung von 0,5 bis 0,005 Mol-%, bezogen auf $a_1$ + $a_2$ + $a_3$, eines oder eines Gemisches von in Radikale zerfallenden Initiatoren mit einer Halbwertszerfallzeit von 5 sec. bis 9 min. bei 130°C.

Die erhaltenen Copolymerisate A haben dann Intrinsic-Viskositäten von 0,45 bis 0,85 dl/g, gemessen bei 25°C in Dimethylformamid, und enthalten 27 bis 30 Gew.-% Acrylnitril eingebaut.

Bei einer kontinuierlichen, homogenen Polymerisation werden in einen Reaktor kontinuierlich die Ausgangskomponenten mit konstanter Fördergeschwindigkeit eingetragen, in demselben Maß wird Reaktionsprodukt abgezogen, so daß sich in dem Reaktor zeitlich ein konstanter Füllgrad einstellt. "Homogen" bedeutet, daß es sich hier um ein einphasiges System handelt. Das gebildete Polymerisat ist in seiner Reaktionsmischung homogen löslich. Auch die Ausgangskomponenten sind in dem Reaktionsgemisch homogen löslich. Bei der homogenen Massepolymerisation wirken die nicht umgesetzten Monomeren als Lösungsmittel für das gebildete Polymerisat. Die Massepolymerisation zeichnet sich durch ihre hohe Raum-Zeit-Ausbeute gegenüber der Emulsions-und Perlpolymerisation aus. Oft empfiehlt es sich, bei der Massepolymerisation eine geringe Menge an Lösungsmittel zuzusetzen, z.B. 5 bis 30 Gew.-% Methylethylketon, Ethylbenzol, usw.

Diese die Viskosität herabsetzenden Zusätze werden im Anschluß an die Polymerisaton zusammen mit den nicht umgesetzten Monomeren entfernt. Der Anteil von $\alpha$-Methylstyrol in der Monomerausgangsmischung von 30 bis 45 Gewichtsprozent ist kritisch. Bei einem Anteil von über 45 Gew.-% $\alpha$-Methylstyrol fällt mit steigendem Anteil die Molmasse des gebildeten Polymerisates rapide ab, zu erkennen in einem Abfall der Intrinsicviskosität unter 0,45 dl/g, gemessen bei 25°C in Dimethylformamid (DMF). Dies macht sich in verschlechterter mechanischer Festigkeit der erhaltenen "ABS"-Formmassen bemerkbar. Harze, die aus einer Monomermischung mit weniger als 30 Gew.-% $\alpha$-Methylstyrol und dementsprechend mehr Styrol hergestellt worden sind, liefern zwar "ABS"-Formmassen mit guter mechanischer Festigkeit, jedoch fällt ihre Wärmeformbeständigkeit ab.

Die Kombination einer Polymerisationstemperatur von 100 bis 140°C, einer Verweilzeit größer als 60 Min. und dem stationären Umsatz von 35-55 Gew.-% ist zur Erzielung besonders vorteilhafter, technisch interessanter Copolymerisate A kritisch. Eine Polymerisationstemperatur über 140°C, ein stationärer Umsatz von über 55 Gew.-% und eine kürzere Verweilzeit als 60 Min. lassen die Molmassen der Harze und damit die mechanische Festigkeit des "ABS" so weit abfallen, daß die besonders vorteilhaften, technisch interessanten Copolymerisate A, die mit der oben genannten Kombination von Maßnahmen herstellbar sind, nicht mehr erhalten werden können. Eine Verlängerung der Polymerisationszeiten über 300 Min. hinaus, eine Erniedrigung des Umsatzes unter 35 Gew.-% und eine Absenkung der Polymerisationstemperatur unter 100°C ist nicht so kritisch in bezug auf die Eigenschaften des Polymerisates, jedoch wird das Verfahren dadurch unwirtschaftlicher. Bei niedrigeren Polymerisationstemperaturen steigt der Bedarf an Initiator zur Erzielung eines bestimmten Umsatzes enorm an. Die Halbwerts-Zerfallzeit des Initiators bei Polymerisationstemperatur - zur Charakterisierung wird die Halbwertszeit bei 130°C verwendet - ist ebenfalls kritisch. Mit rascher zerfallenden Initiatoren, mit Halbwertszeiten von unter 5 Sek. bei 130°C läßt sich zwar die Polymerisation in Gang halten, der Bedarf steigt jedoch und die Molmassen nehmen ab. Das Verfahren wird unwirtschaftlicher und die Produkte mangelhaft. Bei Verwendung von langsamer zerfallenden Initiatoren mit einer Halbwertszerfallszeit von länger als 9 Min. bei 130°C besteht die Gefahr, daß sich nicht zerfallende Initiatoranteile im Reaktionsgut ansammeln, die bei kleinen Störungen ein Durchgehen der Polymeristion bewirken oder bei der Aufarbeitung eine unerwünschte Nachpolymerisation auslösen können.

Als Initiatoren kommen z.B. in Frage:

| | Halbwertszeit bei 130°C |
|---|---|
| tert.-Butylperneodecanoat | 7 s |
| Azo-bis-(2,4-dimethylvaleronitril) | 8 s |
| tert.-Amylperpivalat | 13 s |
| Bis-(3,5,5-trimethylhexanoyl)-peroxid | 13 s |
| Dilauroylperoxid | 15 s |
| tert.-Butylperneohexanoat | 15 s |
| Didecanoylperoxid | 19 s |
| tert.-Butylperpivalat | 20 s |
| Dioctanoylperoxid | 20 s |
| Bis-(2-methylbenzoyl)peroxid | 22 s |
| Azo-bis-(isobutyronitril) | 32 s |
| tert.-Butyl-per2-ethylhexanoat | 68 s |
| Dibenzoylperoxid | 70 s |
| tert.-Butylperisobutyrat | 120 s |

| | Halbwertszeit bei 130°C |
|---|---|
| 1,1-Bis-(t.-butylperoxy)-3,3,5-trimethyl-cyclohexan | 600 s |
| 1,1-Bis-(t.-butylperoxy)-cyclohexan | 420 s |
| tert.-Butyl-per-3,5,5-trimethylhexanoat | 540 s |

Die homogene Polymerisation kann auch in Gegenwart von die Viskosität herabsetzenden Zusätzen wie Methylethylketon, Ethylbenzol, Toluol, tert.-Butanol usw. in Mengen von 5 bis 30 Gew.-%, bezogen auf die Summe von $a_1$, $a_2$ und $a_3$, durchgeführt werden, Dieser Zusatz, der bei Massepolymerisatonen üblich ist, darf nur so weit mitverwendet werden, wie er die Polymerisation nicht allzusehr verlangsamt. Die erfindungsgemäß verwendeten Harze zeichnen sich durch eine hohe chemische und molekulare Einheitlichkeit aus. Die molekulare Uneinheitlichkeit beträgt U = 0,8 bis 1,4, berechnet nach

$$U = \frac{\bar{M}w}{\bar{M}n} - 1$$

( $\bar{M}$ w Gewichtsmittel des Molekulargewichts; $\bar{V}$ n Zahlenmittel des Molekulargewichts).

Die Wärmeformbeständigkeiten der reinen Harze liegen im Bereich von 110 bis 118°C, gemessen nach Vicat B.

Statistische Copolymerisate aus Styrol und Maleinsäureanhydrid sind bekannt und können durch homogene Massepolymerisation von Styrol und Maleinsäureanhydrid in einem kontinuierlich betriebenen, ideal durchmischten Tankreaktor bei unvollständigen Umsätzen unter anschlie ßender Entfernung der nicht umgesetzten Monomeren z.B. nach der Lehre der DAS 2 724 360 oder DOS 2 343 871 hergestellt werden.

Der Maleinsäureanhydridanteil $b_1$ im Copolymerisat B ist kritisch. Weniger als 18 Gew.-% Maleinsäureanhydrid im Copolymerisat B führt im Blend mit A. zu Unverträglichkeiten. Daß hier ein verträgliches Polymersystem vorliegt, ergibt sich aus dem Torsionsschwingungsversuch und aus dem optischen Dispersionskurven der Mischung bzw. der Ausgangskomponenten. Die physikalischen Größen gehorchen einfachen Mischregeln. Die Maleinsäureanhydrid-Copolymerisate B sind statistisch aufgebaut, d.h. alle Molekülketten besitzen in etwa die gleiche Zusammensetzung. Wesentlich ist, daß das Copolymerisat B kein alternierend aufgebautes Styrol/Maleinsäureanhydrid-Copolymerisat enthält. Die Intrinsicviskosität der Copolyerisate B beträgt 0,35 bis 0,7 dl/g, gemessen bei 25°C in DMF, und die molekulare Uneinheitlichkeit U beträgt 0,8 bis 1,6.

Die Wärmeformbeständigkeiten der reinen Harze liegen im Bereich von 135 bis 155°C, gemessen nach Vicat B.

In dem Copolymerisat B kann auch ein Teil des Styrols und/oder p-Methylstryrols $b_2$ durch Methylmethacrylat ersetzt sein. Insgesamt kann das Polymerisat B bis zu 30 Gew.-% Methylmethacrylat einpolymerisiert enthalten.

Es war überraschend, daß die verträglichen Blends aus den Copolymeren A. und B. bei 260°C keine Zunahme der Schmelzviskosität aufweisen, da die in der DE-OS 3 332 327 mit SAN beschriebenen Systeme, bei gleichem Acrylnitrilgehalt, mit den gleichen Komponenten B bei 260°C eine starke Zunahme der Schmelzviskosität und Vernetzung zeigen.

Die verträgliche Mischung aus Copolymerisat A und B dient als Matrixharz zur Herstellung von wärmeformbeständigen "ABS-Formmassen". Man mischt meist die Harzkomponenten mit einer Pfropfkautschukkompnente (C) in der Schmelze in Knetern, Innenmischern, auf Walzen oder Extrudern. Es ist aber auch möglich, eine Polymerzubereitung durch stufenweise Polymerisation herzustellen, z.B. zunächst durch Herstellung der Kautschukphase, auf die dann der Pfropfanteil durch Polymerisation aufgebracht wird. Im Anschluß daran wird die Harzphase polymerisiert.

Die zu verwendenden Pfropfkautschuk-Komponenten (C) sind bekannt. Sie können erhalten werden durch Polymerisation von Styrol, Methylmethacrylat, p-Methylstyrol, $\alpha$-Methylstyrol, mit Acrylnitril oder Maleinsäureanhydrid in Gegenwart einer Kautschukgrundlage. Die Grundlage bezeichnet man auch als Pfropfsubstrat. Man beobachtet, daß bei der Pfropfung auf dem Substrat nicht die gesamten Monomeren aufgepfropft werden, sondern daß ein Teil der Nomomeren zu freiem Harz polymerisiert. Diese Pfropfpolymerisate können in bekannter Weise durch radiakalische Polymerisaton der Monomeren in Gegenwart des Kautschuks in Substanz, Emulsion, Suspension, Lösung, sowie durch kombinierte Verfahren wie Masse/Suspensionpolymerisation oder Lösungs/Fällungspolymerisation hergestellt werden.

Als Pfropfgrundlage werden Natur-und Synthesekautschuke verwendet.

Die zur Pfropfpolymerisation eingesetzten Kautschuke können unvernetzt, teilvernetzt oder hochvernetzt vorliegen. Arbeitet man z.B. mit Lösungspfropfpolymerisation, so geht man von unvernetzten Kautschuken aus, arbeitet man mit Emulsionspfropfung, so können praktisch alle Kautschuke, ob vernetzt oder unvernetzt, Verwendung finden, solange sie auch als Emulsion vorliegen. Die Pfropfpolymerisate (C) selbst enthalten aber auf jeden Fall wenigstens partiell vernetzte Kautschuke, bevorzugt Kautschuke mit einem Vernetzungsgrad von wenigstens 50 Gew.-%. Das bedeutet, daß auch dann, wenn zur Herstellung der Pfropfpolymerisate (C) von unvernetzten Kautschuken ausgegangen wird, während der eigentlichen Pfropfpolymerisaton von Vinylaromat, Acrylnitril, Methylmethacrylat oder MSA auf dem Kautschuk wenigstens eine partielle Nachvernetzung der Kautschukanteile stattfinden muß.

Unter den erfindungsgemäßen geeigneten Pfropfpolymerisaten (C) sind also damit wenigstens teilvernetzte Polymerisate zu verstehen. Normalerweise besitzen die Pfropfpolymerisate wenigstens einen Gelgehalt (also unlöslichen Anteil als Maß für den Vernetzungsgrad) von wenigstens 15 Gew.-%, vorzugsweise wenigstens 50 Gew.-%, insbesondere wenigstens 60 Gew.-%, gemessen bei 23°C in organischen Lösungsmitteln.

Die Pfropfpolymerisation der aufgeführten Monomeren, gegebenenfalls in Mischung mit kleinen Mengen Comonomer, wird vorzugsweise radikalisch oder thermisch initiiert.

Als Pfropfgrundlage (C 1) werden Natur-und Synthesekautschuke in löslicher oder unvernetzter Form verwendet. Geeignete Synthesekautschuke sind Homo-und Copolymerisate von gegebenenfalls Halogen substituierten, konjugierten Dienen mit 4 bis 8 Kohlenstoffatomen wie Butadien, Isopren, Chloropren und deren Copolymerisate mit Styrol und/oder Acrylnitril. Die Copolymerisate können statistisch oder blockartig aufgebaut sein. Bei blockartigen Produkten kann es sich um Zweiblockpolymere der Formel AB oder auch um Dreiblockpolymere der Formel ABA, sowie um sternförmige Blockpolymere etwa der Formel $(ABA)_xY$ handeln, wobei A z.B. für Styrol, B für Butadien und Y für ein mehrfunktionelles Kupplungsreagenz, wie z.B. $SiCl_4$, $S_2Cl_2$, Divinylbenzol, epoxidierte Fettsäuren u.a. steht; x liegt in der Größenordnung von 2 bis 5. Bei Verwendung von löslichem Kautschuk werden bevorzugt Polybutadiene mit einem hohen cis-Anteil an Doppelbindungen in der Polymerkette von über 55 %, wobei der Anteil an 1,2-Vinyl-Doppelbindungen bis 15 %, bezogen auf alle Doppelbindungen, betragen kann, sowie lineare sowie sternförmige Styrol-Butadien-Blockpolymere mit einem Styrolanteil von 5 bis 45 Gew.-%, eingesetzt.

Eine weitere Klasse der Synthesekautschuke besteht aus Ethylen-Propylen-Co-und Terpolymeren. Sie enthalten 70 bis 30 Gew.-Teile Ethylen auf 30 bis 70 Gew.-Teile Propylen. Vorteilhaft sind Terpolymere mit 4 bis 15 Gew.-% z.B. 5-Ethylidennorbornen, Dicyclopentadien, Hexadien-1,4, 2,2,1-Bicycloheptadien mit etwa 1 bis 20 C=C-Doppelbindungen pro 1000 Atome. Pfropfkomponente auf Basis dieser sogenannten EPDM-oder APTK-Kautschuke zeichnen sich durch besonders gute Witterungsbeständigkeit aus. Zu den witterungsbeständigen Pfropfkomponenten gehören ebenfalls die Klasse der Polyethylen-co-vinylacetate (EVA) und der Acrylat-Elastomere. Die EVA-Elastomere enthalten 30 bis 85 % einpolymerisiertes Vinlyacetat, können zur besseren Bepfropfbarkeit mit ungesättigten Carbonsäuren, z.B. Acryl-oder Methacrylsäure seitenständig verestert sein, die EVA-Copolymere können auch teilverseift sein mit OH-Zahlen von 1 bis etwa 100 mg KOH/g Substanz. Bei den Acrylatkautschuken handelt es sich meist um Copolymerisate von $C_2$-$C_8$-Alkylester der Acrylsäure, wie z.B. Ethyl-, n-oder iso-Propyl-, n-Butyl-, iso-Butyl-, tert.-Butyl-, 2-Ethylhexyl-acrylat. Weitere Comonomere sind u.a. Methacrylate mit 1 bis 14 C-Atomen im Esterteil, Butadien, Vinylalkylether mit 1 bis 18 C-Atomen im Ether-Teil. Diese Acrylatkautschuke enthalten gegebenenfalls kleine Mengen polyfunktioneller Vinyl-oder Allylmonomerer zur Ver netzung des Acrylatkautschukes. Solche funktionellen Monomere sind z.B. Alkylenglykoldi(meth)acrylate, (Meth)Acrylsäurevinylester Triallylcyanurat, Butadien, Isopren, Divinylbenzol, usw.

Die Pfropfkomponente (C) kann auch mehrschalig aufgebaut sein, z.B. aus einem Polybutadien-, Polystyrol-, Polymethylmethacrylat-oder SAN-Polymer-Kern bestehen, der mit einem Polyacrylsäureester umhüllt ist. Eine bevorzugte Stellung nehmen die Pfropfsubstrate auf Basis von Polybutadien und Polyacrylsäureester ein, wie sie beispielsweise ausführlich in den Schriften DE-OS 30 39 114, 30 39 115, 31 17 052, 32 10 284, EP O 063 263 und EP O 064 692 beschrieben sind.

Die Bestandteile A., B. und C. werden getrennt hergestellt und nach herkömmlichen Mischtechniken der Polymerblendherstellung auf Walzen, Knetern, Innenmischern, Schneckenmaschinen durch Lösungs-oder Schmelzcompoundieren gemischt. Übliche Zusatzstoffe sind Gleitmittel, Stabilisatoren, Flammschutzmittel, Pigmente, verstärkende Füllstoffe, mineralische Füllstoffe, Mattierungsmittel etc. Die Polymerblend-Formmassen dienen zur Herstellung von Formmassen jeglicher Art. Sie zeichnen sich insbesondere durch ein gutes Fließverhalten beim Spritzguß oder bei Extrusion, durch die hohe Wärmeformbeständigkeit, Festigkeit und gute Zusammenfließnahtfestigkeit aus. Insbesondere zeigen sie kein Aufschiefern oder Delaminieren der Formkörper bei mechanischer Beanspruchung. Die beanspruchten Polymerblends besitzen einen ausgezeichneten hellen Rohton und können ohne Verfärbung bei Tempeaturen von 240 bis 280°C bei kurzen Zykluszeiten unter hoher Maschinenauslastung verarbeitet werden ohne daß eine Nachvernetzung auftritt.

Die aus den erfindungsgemäßen Harzen hergestellten "ABS-Formmassen" besitzen eine Wärmeformbeständigkeit von mindestens 110°C, vorzugsweise von 115 bis 130°C nach Vicat B. Verglichen mit ABS-Formmassen auf Basis von Styrol/Acrylnitril Copolymeren in Blends mit Styrol/Maleinsäureanhydridcopolymeren, bei gleichem MSA-Anteil im Styrol/MSA-Copolymerisat, ist die praktische Wärmeformbeständigkeit um 5 bis 10°C höher.

Die Erfindung wird durch die folgenden Beispiele näher erläutert. In den Beispielen sind, wenn nicht anders angegeben, Teile Gewichtsteile und Prozente Gewichtsprozente.

## Herstellung des Harzes A

In einem unmantelten Gefäß, das mit Innenthermometer, Rührer, Ein-und Auslaß versehen ist, wurden 1000 Teile eines Gemisches der Monomeren mit einer Zusammensetzung entsprechend Tabelle 1 vorgelegt und auf 130°C (bzw. 125°C) erwärmt. Dann wurde ein Monomerstrom derselben Zusammensetzung so zudosiert und gleichzeitig dieselbe Menge an Polymerlösung dem Gefäß entnommen, daß sich die gewünschte Verweilzeit im Gefäß ergab und der Füllstand gehalten wurde. Dem Monomereintrittsstrom wurde kontinuierlich die in Tabelle 1 angegebene Menge Initiator zugefügt. Nach ca. 6 Stunden hatte sich ein konstanter Umsatz von ca. 30-65 % eingestellt. Die Polymerlösung wurde anschließend in einem Ausdampfextruder von den nicht umgesetzten Monomeren und Lösungsmitteln befreit und granuliert.

Die Harze des Copolymers B wurden nach den in der Literatur beschriebenen Verfahren hergestellt, vgl. z.B. DE-DAS 2 724 360 oder DE-OS 2 343 871 und sind in der Tabelle 2 zusammengestellt.

Herstellung der Abmischungen:

Die Komponenten wurden entsprechend Tabelle 3 gemischt und bei 230°C auf einem konischen Zweiwellenextruder compoundiert. Die Probekörper wurden bei 240°C gespritzt.

Als Kauschukkomponente C wurde in allen Beispielen ein Pfropfkautschuk verwendet, der durch Pfropfung von 50 Teilen Styrol und Acrylnitril im Gewichts-Verhältnis 72/28 auf 50 Teile eines in Emulsion polymerisierten Polybutadiens, wobei der Teilchendurchmesser zwischen 0,1 und 0,4 μm liegt, hergestellt wurde. Weiterhin wurden dem Pfropfkautschuk 2 Teile Gleitmittel zugesetzt.

Zur Beurteilung der Vernetzungsneigung der Formmassen wurden die Formmasen auf 260°C bzw. 280°C aufgewärmt und bei dieser Temperatur gehalten. Nach 5, 10, 15 und 20 Minuten wurde dann die Fließfähigkeit nach der MFI-Methode bestimmt.

## Tabelle 1

### Harzkomponente A und Vergleichskomponente D

| Produkt | Einsatzmonomere: | | | | Temperatur ($^{o}$C) | Umsatz (%) | Initiator tert.-Butyl-perpivalat (Tl.) | Verweil-zeit (h) | Polymerisat: | | Acrylnitril (Gew.-%) |
|---|---|---|---|---|---|---|---|---|---|---|---|
| | Styrol (Tl.) | α-Methyl-styrol (Tl.) | p-Methyl-styrol (Tl.) | Acryl-nitril (Tl.) | | | | | 25 DMF (dl/g) | Vicat B ($^{o}$C) | |
| $A_1$ | 30 | 40 | - | 30 | 130 | 38 | 0,051 | 1,3 | 0,56 | 115 | 27,6 |
| $A_2$* | 35 | 35 | 6 | 30 | 125 | 43 | 0,037 | 2,2 | 0,63 | 112 | 27,4 |
| $A_3$ | 30,6 | 38,8 | - | 30,6 | 125 | 34 | 0,076 | 1,6 | 0,60 | 117 | 27,7 |
| $A_4$ | - | 35 | 35 | 30 | 130 | 43 | 0,030 | 1,9 | 0,60 | 113 | 27,6 |
| D | 70 | - | | 30 | | | hergestellt nach DAS 2 724 360 0,55 103 | | | | 27,6 |

*  +  6 Tl. Ethylbenzol

0 264 791

a Index n Schlagzähigkeit nach DIN 53 453. Es wurden jeweils 10 Normkleinstäbe geprüft. Wenn nicht alle Stäbe bei einer gegebenen Schlagbeanspruchung gebrochen sind, so ist die Schlagbeanspruchung und die Anzahl der gebrochenen Stäbe dahinter angegeben.

a Index k Kerbschlagzähigkeit nach DIN 53 453

Vic. B Vicat Erweichungstemperatur VST/B 120 nach DIN 53 460

MFI Schmelzindex nach DIN 53 735 bei 220°C

MSA Maleinsäureanhydrid

MMA Methylmethacrylat

DMF Dimethylformamid.

Vergleichsharz D

Hierbei handelt es sich um ein Polystyrol-Co-Acrylnitril Masseharz (SAN), das nach DAS 2 724 360 hergestellt worden ist.

Tabelle 2

Harzkomponente B hergestellt nach dem Verfahren der DE-DAS 2 724 360

| Produkt | Zusammensetzung | | | 25 DMF (dl/g) | Vicat B (°C) |
|---|---|---|---|---|---|
| | Styrol (Tl.) | MSA (Tl.) | MMA (Tl.) | | |
| B₁ | 76 | 24 | – | 0,55 | 148 |
| B₂ | 78,5 | 21,5 | – | 0,53 | 143 |
| B₃ | 78 | 22 | – | 0,57 | 144 |
| B₄ | 80* | 20 | – | 0,46 | 141 |
| B₅ | 62 | 22 | 6 | 0,59 | 144 |

* Styrol/p-Methylstyrol im Gew.-Verhältnis 2:1

## Tabelle 3

### Zusammensetzung und anwendungstechnische Daten der Abmischungen

| | Zusammensetzung (Teilen) | | | $a_n$ ($kJ/m^2$) | $a_k$ ($kJ/m^2$) | Vicat B. ($^0$C) | MFI 220/10 (g/10 min) | $H_c30$ ($N/mm^2$) | Abnahme der Schmelz-viskosität |
|---|---|---|---|---|---|---|---|---|---|
| 1 | 38,75 $A_1$ | 38,75 $B_2$ | 22,5 C | 48,6 | 3,9 | 119 | - | 126 | nein |
| 2 | 46,5 $A_1$ | 31,0 $B_2$ | 22,5 C | 54,6 | 5,2 | 117 | - | 125 | nein |
| 3 | 63,0 $A_2$ | 7,0 $B_3$ | 30,0 C | | 8,4 | 111 | 5,5 | 115 | nein |
| 4 | 56,0 $A_2$ | 14,0 $B_3$ | 30,0 C | | 7,8 | 112 | 5,1 | 115 | nein |
| 5 | 49,0 $A_2$ | 21,0 $B_3$ | 30,0 C | | 8,3 | 113 | 4,5 | 112 | nein |
| 6 | 42,0 $A_2$ | 28,0 $B_3$ | 30,0 C | | 9,6 | 113 | 3,9 | 105 | nein |
| 7 | 47,0 $A_1$ | 31,4 $B_2$ | 21,6 C | 54,6 | 5,2 | 117 | - | 125 | - |
| 8 | 36,0 $A_3$ | 36,0 $B_1$ | 28,0 C | 72(4) | 8,8 | 118 | 3,4 | 108 | - |
| 9 | 36,0 D | 36,0 $B_1$ | 28,0 C | - | 5,6 | 115 | 6,9 | 112 | stark |
| 10 | 42,2 $A_3$ | 28,8 $B_5$ | 28,0 C | - | 8,7 | 115 | 4,1 | 110 | - |
| 11 | 50,0 $A_4$ | 20,0 $B_2$ | 30,0 C | - | 8,0 | 113 | 4,2 | 114 | nein |

Abmischung 9: Vergleichsbeispiel

0 264 791

**Ansprüche**

Thermoplastische Formassen aus
A. 90 bis 30 Gew.-Teilen eines durch Lösungs-oder Massepolymerisation von
$a_1$ 30 bis 45 Gew.-% $\alpha$-Methylstyrol,
$a_2$ 26 bis 35 Gew.-% Acrylnitril und
$a_3$ 44 bis 20 Gew.-% Styrol und/oder p-Methylstyrol
hergestellten Copolymerisates mit einem Gehalt an eingebautem Acrylnitril von 27-30 Gew.-%,
B. 5 bis 60 Gew.-Teilen eines statistischen Copolymerisates aus
$b_1$ 18 bis 24 Gew.-% Maleinsäureanhydrid und
$b_2$ 82 bis 76 Gew.-% Styrol und/oder p-Methylstyrol und
C. 5 bis 40 Gew.-Teilen eines Pfropfpolymerisates von 70 bis 30 Gew.-% eines Gemisches aus
$c_1$ einem Vinylaromat und/oder $C_1$-$C_4$-Methylacrylsäurealkylester und
$c_2$ Acrylnitril auf 30 bis 70 Gew.-% eines Kautschuks mit einer Glasübergangstempeatur von unter -10°C.